# EUROPEAN PATENT SPECIFICATION

(11) **EP 4 247 028 B1**
(45) Date of publication and mention of the grant of the patent: **16.04.2025**
(21) Application number: 23159624.8
(22) Date of filing: 02.03.2023
(51) Int. Cl.: H04W 48/18, H04W 60/00, H04W 84/18, H04W 88/08

(54) **AD HOC RADIO BASE STATION, SYSTEM, METHODS, AND COMPUTER PROGRAMS**
AD-HOC-FUNKBASISSTATION, SYSTEM, VERFAHREN UND COMPUTERPROGRAMME
STATION DE BASE RADIO AD HOC, SYSTÈME, PROCÉDÉS ET PROGRAMMES INFORMATIQUES

(30) Priority: 17.03.2022 US 202263320831 P
(43) Date of publication of application: 20.09.2023
(73) Proprietor: EXFO Oy, 90590 Oulu (FI)
(72) Inventor: Kemppainen, Jukka, 90590 Oulu (FI); Lehtikangas, Juha Olavi, 90590 Oulu (FI)
(74) Representative: Kolster Oy Ab

(56) References cited:
- EP-A1- 2 779 714
- EP-A2- 3 032 883
- WO-A1-2021/178387
- US-A1- 2010 273 504
- US-A1- 2011 319 010
- US-A1- 2020 145 830

## Description

### FIELD

Various embodiments relate to an hoc radio base station, a system comprising a first ad hoc radio base station and a second ad hoc radio base station, a method for implementing two successive ad hoc cells, a method for implementing two simultaneous ad hoc cells, a computer-readable medium comprising computer program code, which, when executed by one or more microprocessors, causes performance of a method for implementing two successive ad hoc cells, and a computer-readable medium comprising computer program code, which, when executed by one or more microprocessors, causes performance of a method for implementing two simultaneous ad hoc cells.

### BACKGROUND

An ad hoc radio base station implements an ad hoc (created for a particular purpose as necessary) cell to operate in parallel with existing (usually permanent) cells. The ad hoc radio base station may be used in a surveillance operation, for example. As pre-planning of the ad hoc cell may not be possible, and co-operation with existing cellular radio network infrastructure may be minimal, operation of the ad hoc radio base station needs to be sophisticated to enable flexible and easy operation. EP 1908318 B1, for example, discloses a method for determining a direction of a mobile communication device using a separately introduced base station.

US 2010/273504 discloses a network autonomous wireless location system, EP 3032883 discloses a geographical detection of mobile terminals, US 2011/319010 discloses identification of mobile phones; EP 2779714 discloses determining number of people in an area, US 2020/145830 discloses detection of surveillance device and WO 2021/178387 discloses a system for phone privacy.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
FIG. 1A illustrates embodiments of an ad hoc radio base station;
FIG. 1B illustrates a system comprising a first ad hoc radio base station and a second ad hoc radio base station;
FIG. 2A, FIG. 2B, and FIG. 2C illustrate an implementation of successive ad hoc cells using the ad hoc radio base station;
FIG. 2D, and FIG. 2E illustrate an implementation of two simultaneous ad hoc cells using the first ad hoc radio base station and the second ad hoc radio base station;
FIG. 3A and FIG. 3B are flow charts illustrating embodiments of a method for implementing two successive ad hoc cells; and
FIG. 4A and FIG. 4B are flow charts illustrating embodiments of a method for implementing two simultaneous ad hoc cells.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

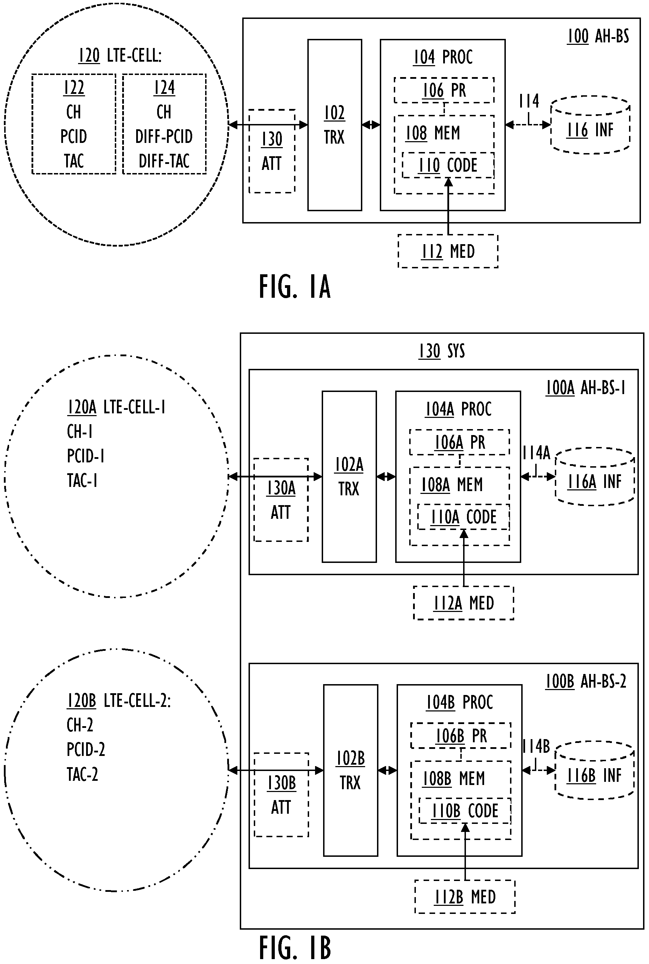

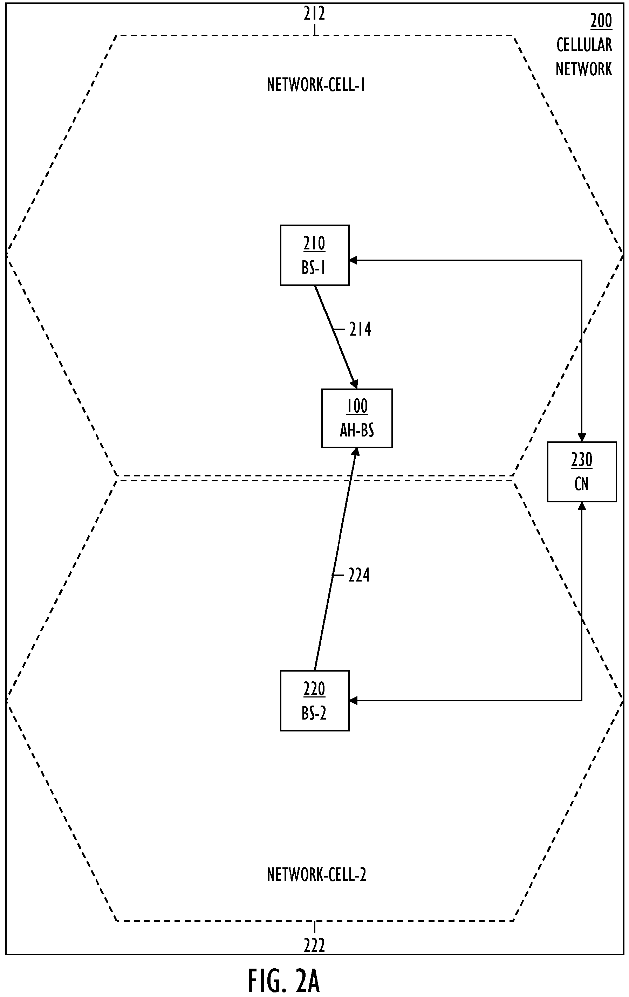

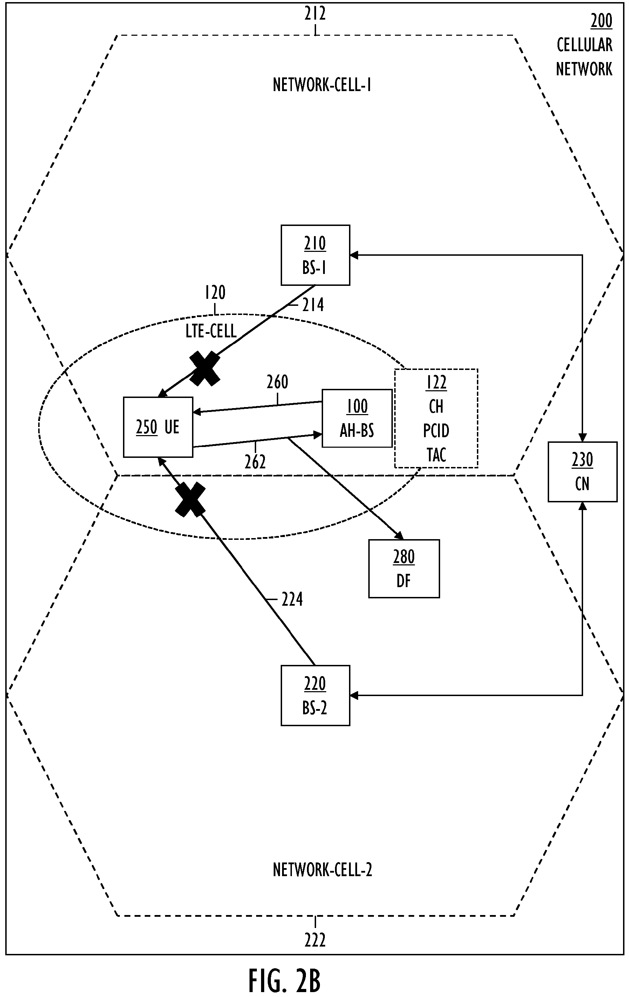

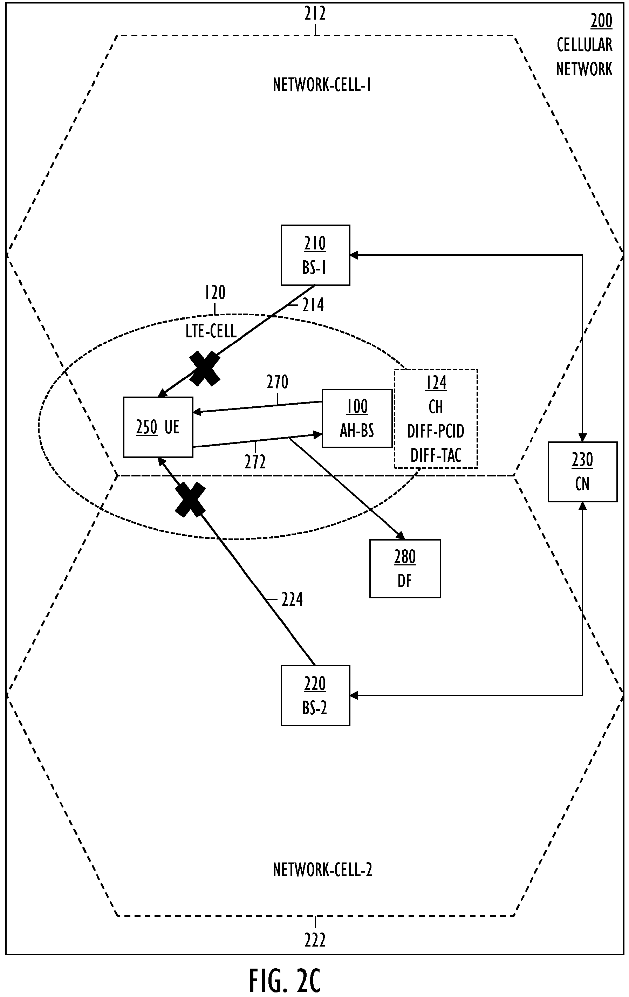

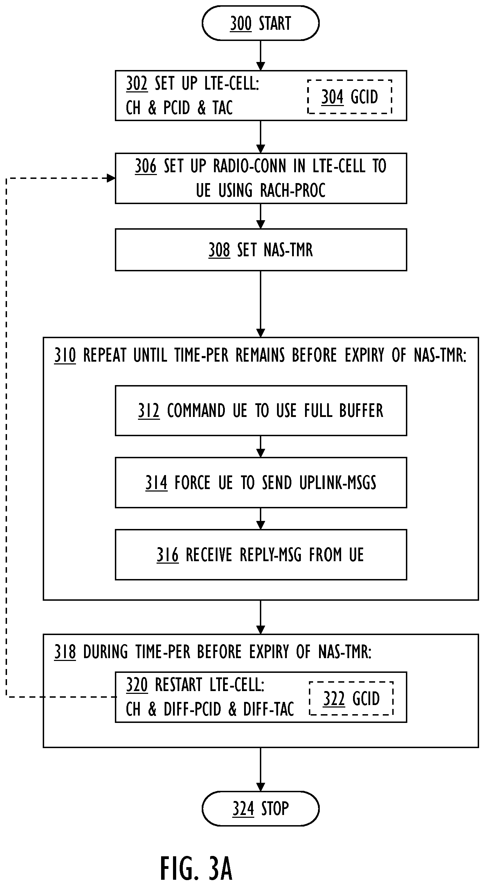

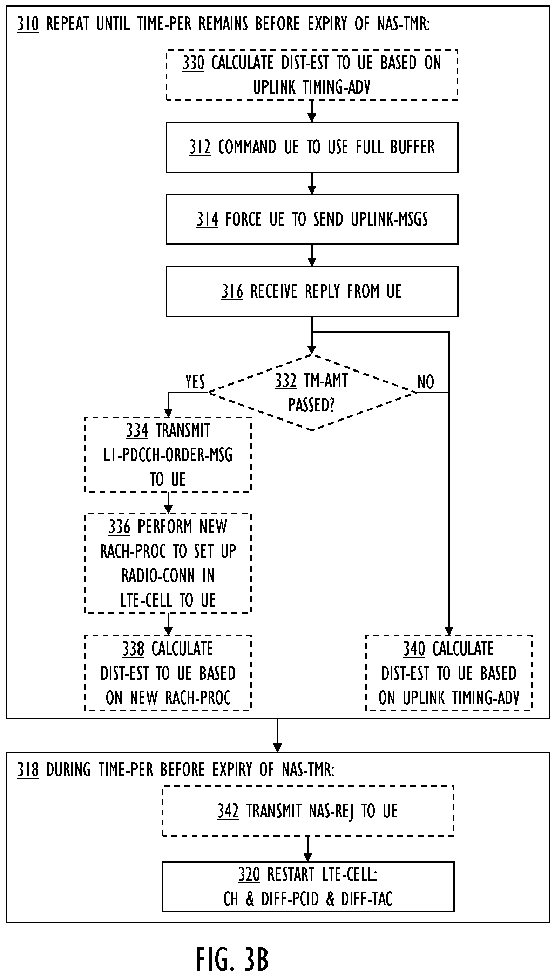

Let us study FIG. 1A, which illustrates embodiments of an ad hoc radio base station 100, FIG. 2A, FIG. 2B, and FIG. 2C, which illustrate an implementation of successive ad hoc cells 120+122 and 120+124 using the ad hoc radio base station 100, and FIG. 3A and FIG. 3B, which illustrate embodiments of a method for implementing the two successive ad hoc cells 120+122 and 120+124.

An existing Long-Term Evolution (LTE) cellular radio network 200 is already in place and operating. The LTE cellular radio network 200 comprises one or more radio base stations 210, 220. Each radio base station 210, 220 provides an access for LTE user apparatuses 250 residing in a cell 212, 222 maintained by the radio base station 210, 220 to utilize communication resources of the LTE cellular radio network 200. The LTE cellular radio network 200 also comprises a core network 230 with numerous network elements. The radio base station (BS) 210, 220 may also be known as a base transceiver station (BTS), an access point (AP), or an eNodeB (eNB), for example.

The radio base station 210, 220 operates according to LTE technology, sometimes referred to as a fourth generation (4G), defined in numerous telecom standard specifications.

The LTE user apparatus 250 may also be known as a user equipment (UE), a radio terminal, a subscriber terminal, a smartphone, a mobile station, a mobile phone, a portable computer, a tablet computer, a smartwatch, smartglasses, a game terminal, a machine-type communication (MTC) apparatus, an IoT (Internet of Things) apparatus, a sensor apparatus, or some other type of wireless mobile communication device operating with or without a subscriber identification module (SIM) or an eSIM (embedded SIM). The LTE user apparatus 250 may be a device that is configured to associate the LTE user apparatus 250 and its user with a subscription and allows the user to interact with the LTE cellular radio network 200, i.e., the LTE user apparatus 250 is capable of requesting service from the LTE cellular radio network 200. The LTE user apparatus 250 may present information to the user and allow the user to input information. In other words, the LTE user apparatus 250 may be any user apparatus capable of wirelessly receiving information from and/or wirelessly transmitting information to the LTE cellular radio network 200. Besides communication capabilities, the LTE user apparatus 250 may include computer functionalities, functionalities of other data processing devices, and/or one or more sensors.

The ad hoc radio base station 100 implements two successive ad hoc LTE cells 120+122 and 120+124 to operate in parallel with the existing LTE cells 212, 222. The ad hoc radio base station 100 may be used in a surveillance operation (such as in communications intelligence, or COMINT) to gather information regarding the user apparatus 250. In other words, the main reason to add the ad hoc radio base station 100 to an area is to get LTE user apparatuses 250 to connect to the ad hoc radio base station 100.

The ad hoc radio base station 100 comprises one or more radio transceivers 102 configured to receive and transmit in the LTE cellular radio network 200, and means for causing performance of the ad hoc radio base station 100. In an embodiment, the means comprise one or more processors 104.

In an embodiment illustrated in FIG. 1, the one or more processors 104 comprise one or more memories 108 including computer program code 110, and one or more microprocessors 106 configured to execute the computer program code 110 to cause the performance of the ad hoc radio base station 100.

In an alternative embodiment, the means comprise a circuitry configured to cause the performance of the ad hoc radio base station 100.

A non-exhaustive list of implementation techniques for the one or more microprocessors 106 and the one or more memories 108, or the circuitry includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 108 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program code (or software) 110 may be written by a suitable programming language (such as C, C++, assembler, or machine language, for example), and the resulting executable code may be stored in the one or more memories 108 and run by the one or more microprocessors 106. The computer program code implements the method/algorithm illustrated in FIG. 3A and FIG. 3B. The computer program code 110 may be stored in a source code form, object code form, executable form, or in some intermediate form, but for use in the one or more microprocessors 106 it is in the executable form. There are many ways to structure the computer program code 110: the operations may be divided into modules, sub-routines, methods, classes, objects, applets, macros, etc., depending on the software design methodology and the programming language used. In modern programming environments, there are software libraries, i.e., compilations of ready-made functions, which may be utilized by the computer program code 110 for performing a wide variety of standard operations. In addition, an operating system (such as a general-purpose operating system or a real-time operating system) may provide the computer program code 110 with system services.

An embodiment provides a computer-readable medium 112 storing the computer program code 110, which, when loaded into the one or more microprocessors 106 and executed by the one or more microprocessors 106, causes the performance of the computer-implemented method/algorithm. The computer-readable medium 112 may comprise at least the following: any entity or device capable of carrying the computer program code 110 to the one or more microprocessors 106, a record medium, a computer memory, a read-only memory, an electrical carrier signal, a telecommunications signal, and a software distribution medium. In some jurisdictions, depending on the legislation and the patent practice, the computer-readable medium 112 may not be the telecommunications signal. In an embodiment, the computer-readable medium 112 is a computer-readable storage medium. In an embodiment, the computer-readable medium 112 is a non-transitory computer-readable storage medium.

Now that the structure of the ad hoc radio base station 100 and its operating environment have been described, let us study the dynamics of the method/algorithm with reference to FIG. 3A for the main sequence, and FIG. 3B illustrating optional embodiments. The method starts in 300 and ends in 324. The operations are not strictly in chronological order and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

FIG. 2A illustrates a first operation phase, wherein the ad hoc radio base station 100 is preparing for the actual operation.

First, information regarding the existing LTE cells 212, 222 is obtained. The ad hoc radio base station 100 may either comprise a radio scanner (possibly utilizing the one or more radio transceivers 102) to scan a predetermined radio spectrum to generate the information, or the ad hoc radio base station 100 may receive the information from an external radio scanner. The information may at least partly be obtained by receiving 214, 224 system information from the existing LTE cells 212, 222. The information may include SIB1 (SystemInformationBlockType1). The ad hoc radio base station 100 may retrieve 114 at least a part of the information from an internal or external data source 116, such as from an internal or external database.

FIG. 2B illustrates a second operation phase, wherein the ad hoc radio base station 100 sets up the ad hoc LTE cell 120+122.

In 302, the ad hoc LTE cell 120+122 is set up on a channel number with a Physical Cell ID (PCID), and a Tracking Area Code (TAC). The channel number may be selected such that it is not in use in the adjacent existing LTE cells 212, 222.

In an embodiment, the channel number is defined as an E-UTRA Absolute Radio Frequency Channel Number (EARFCN). EARFCN may be an integer in a range from 0 to 65535.

FIG. 2B also illustrates a third operation phase, wherein the ad hoc LTE cell 120+122 starts to serve the LTE user apparatus 250. Instead of providing full service with data and/or speech transmission, the ad hoc LTE cell 120+122 keeps the LTE user apparatus 250 connected so that appropriate surveillance operations may be performed. As shown in FIG. 2B, the LTE user apparatus 250 may receive transmissions 214, 224 from the existing LTE base stations 210, 220, but a transmission 260 from the ad hoc LTE base station 100 is received with a higher power and/or a better quality at the LTE user apparatus 250, which causes that the LTE user apparatus 250 connects 262 to the ad hoc LTE base station 100.

In 306, a radio connection 260, 262 is set up in the ad hoc LTE cell 120+122 to the LTE user apparatus 250 using a Random Access Channel (RACH) procedure. In an embodiment, a transmission power of the ad hoc LTE cell 120+122 is set such that LTE user apparatuses 250 residing in the ad hoc LTE cell 120+122 inevitably connect to the ad hoc LTE cell 120+122 (instead of the LTE cells 212, 222 of the existing cellular radio network 200).

In 308, a Non-Access Stratum (NAS) timer is set simultaneously with the setting up of the radio connection 260, 262. In an embodiment, the NAS timer is T3411, which is specified in standard 3GPP 24.301, and whose length (or duration) is 10 seconds. The NAS timer may be set in 308 simultaneously with a setting of a NAS timer in the LTE user apparatus 250. In this way, the ad hoc base station 100 is able to act before the NAS timer expires in the LTE user apparatus 250. As the ad hoc base station 100 knows when the radio connection is set up 260, 262, the NAS timer may be set in the ad hoc base station 100 with an adequate precision to coincide with the setting of the NAS timer in the LTE user apparatus 250.

In 310, the following operations 312-314-316 are repeated until a predetermined period of time remains before an expiry of the NAS timer. The predetermined period of time may vary in length.

For example, if the length of the NAS timer is 10 seconds, the predetermined period of time may be 1-2 seconds, taking into account that the NAS timer may be set in the ad hoc base station 100 a little bit later than the NAS timer is set in the LTE user apparatus 250. Furthermore, enough time need to be reserved for the operations performed during the predetermined period of time before the expiry of the NAS timer.

However, the predetermined period of time may also be 8-9 seconds, especially if the "ping-pong" (= switching) between the successive ad hoc cells 120+122 and 120+124 is kept fast. In this way, the LTE user apparatus 250 keeps on transmitting in the uplink 262 with a relatively high transmission power, because otherwise the transmission power in the uplink 262 is being gradually lowered after the RACH procedure.

In 312, the LTE user apparatus 250 is commanded with a Medium Access Control (MAC) control message in the radio connection 260 to use full buffer in all uplink messages of the radio connection 262.

In 314, the LTE user apparatus 250 is forced to send uplink messages in the radio connection 262 by sending to the LTE user apparatus 250 one of a Radio Resource Control User Equipment (RRC UE) capability request message, an NAS identity request message, or an NAS security mode command message.

In 316, a reply message is received in the radio connection 262 from the LTE user apparatus 250.

In 320, during the predetermined period of time 318 before the expiry of the NAS timer, the ad hoc LTE cell 120+124 is restarted on the channel number with a different PCID, and a different TAC than in the previous radio connection.

FIG. 2C illustrates this fourth operation phase, wherein the ad hoc LTE cell 120+124 continues the serving of the LTE user apparatus 250

Performance is continued from the setting up in 306 of the radio connection 270, 272 in the ad hoc LTE cell 120+124 to the LTE user apparatus 250 using the RACH procedure.

The sequence 306-308-310-312-314-316-318-320 is performed before an integrity protection is activated and may be continued as long as needed to keep the LTE user apparatus 250 connected to the successive ad hoc LTE cells 120+122 and 120+124. During the connection, a direction finding of the LTE user apparatus 250 may be performed. One part of the direction finding is to calculate a distance estimate from the ad hoc radio base station 100 to the LTE user apparatus 250.

In an embodiment, the ad hoc LTE cell 120+122 is set up in 302 on the channel number using also a Global Cell ID (GCID), and the ad hoc LTE cell 120+124 is restarted in 320 on the channel number also with a different GCID than in the previous radio connection.

In an embodiment, during the predetermined period of time 318 before the expiry of the NAS timer, and before restarting in 320 the ad hoc LTE cell 120+122 / 120+124 on the channel number with the different PCID, and the different TAC than in the previous radio connection, an NAS reject message with a network failure or congestion as the cause is transmitted in 342 in the radio connection 260/270 to the LTE user apparatus 250.

In an embodiment, after receiving the reply message in the radio connection 262/272 from the LTE user apparatus 250 in 316, a distance estimate to the LTE user apparatus 250 is calculated in 340 based on a current uplink timing advance value of the radio connection 262. Note that the distance estimate to the LTE user apparatus 250 may also be calculated in 330 as a first operation within the repeat loop 310 based on a current uplink timing advance value of the radio connection 262.

In an embodiment, after receiving the reply message in the radio connection 262/272 from the LTE user apparatus 250 in 316, it is checked in 332 whether a predetermined amount of time starting from a previous RACH procedure has passed during the predetermined period of time. The predetermined period of time may be kept relatively short, but also long enough so that state machines of communications protocols operating within the LTE user apparatus 250 do not malfunction or even crash. The predetermined period of time may be about one second, for example. If the predetermined amount of time has passed (the test in 332 evaluates "YES"), a Layer 1 Physical Downlink Control Channel (L1 PDCCH) order message is transmitted in 334 in the radio connection 260/270 to the LTE user apparatus 250, and a new RACH procedure with the LTE user apparatus 250 is performed in 336 to set up the radio connection 260, 262 / 270, 272 in the ad hoc LTE cell 120+122 / 120+124 to the LTE user apparatus 250. In an embodiment, a distance estimate to the LTE user apparatus 250 is calculated based on the new RACH procedure setting up the radio connection 260, 262 / 270, 272. In addition to the calculation of the distance estimate, a more general direction finding of the LTE user apparatus 250 may be performed based on parameters obtained during the new RACH procedure. One way to perform the direction finding is to move the ad hoc base station 100 between successive distance estimates to the LTE user apparatus 250. The successive distance estimates may be defined as circles around the ad hoc base station 100, and an intersection area of the circles may be calculated as a target area, wherein the LTE user apparatus 250 is residing. In an embodiment, a special portable direction finding apparatus 280 may be used: as shown in FIG. 2B and FIG. 2C, the apparatus 280 is instructed to receive and measure the uplink transmissions 262, 272 from the LTE user apparatus 250, whereby the apparatus 280 may estimate the direction to the LTE user apparatus 250. As explained earlier, the use of the high transmission power in the uplink 262, 272 improves the direction finding operation of the apparatus 280 in relation to the LTE user apparatus 250. In an embodiment, a variable attenuator 130 may be placed in the ad hoc base station 100 in the line between an antenna (not illustrated in FIG. 1A or FIG. 1B) and the one or more radio transceivers 102. If the received uplink signal 262, 272 is attenuated in the ad hoc base station 100 before its processing, the LTE user apparatus 250 is forced to use more transmission power.

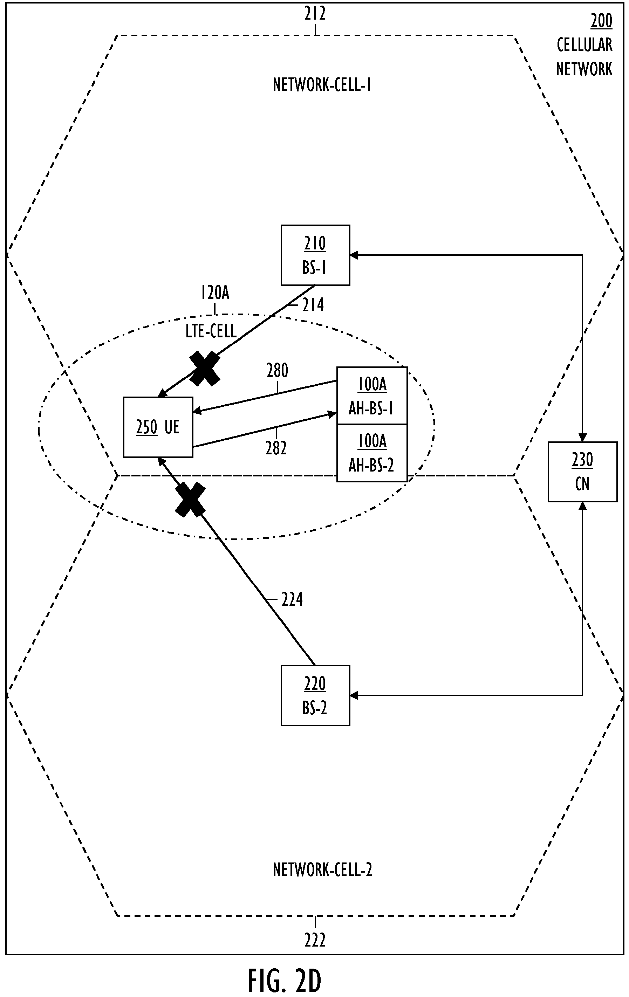

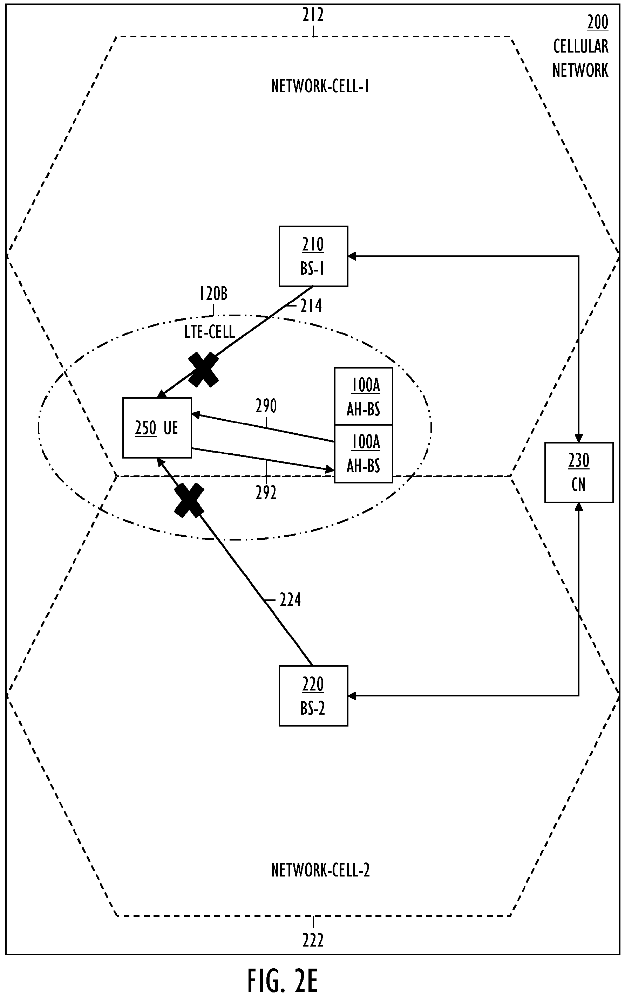

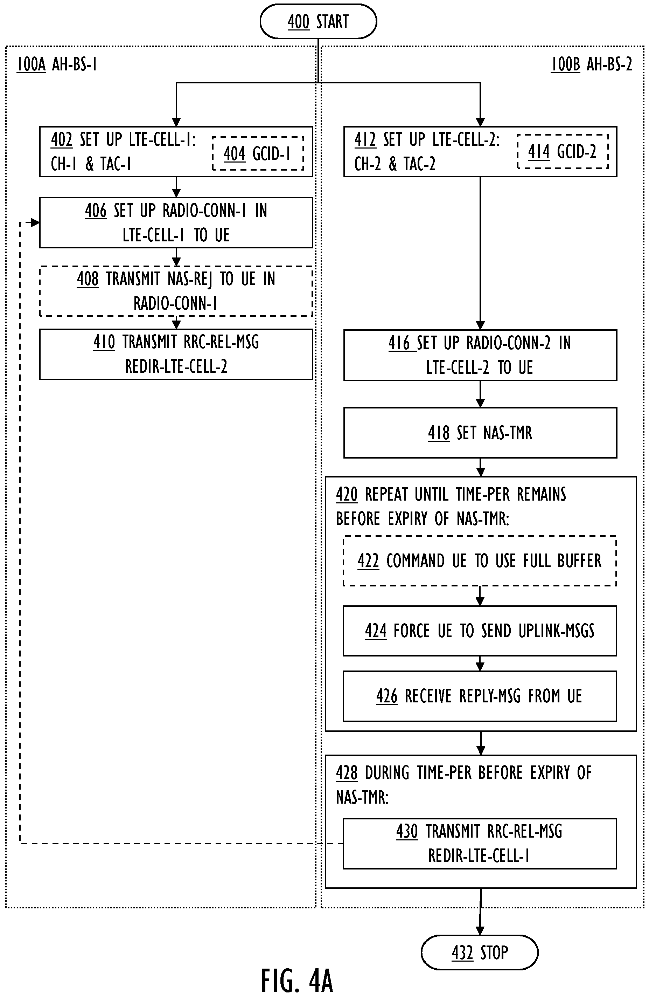

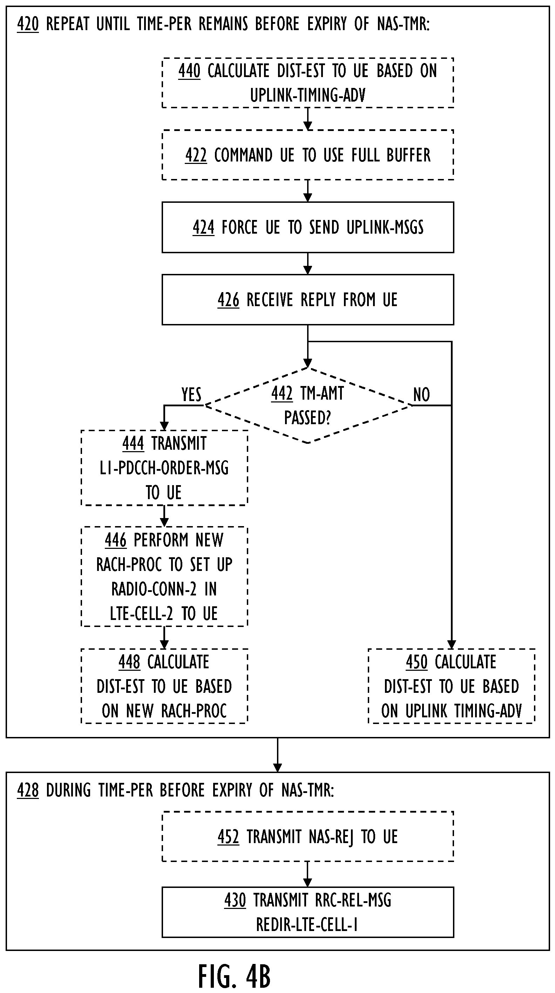

Let us next study FIG. 1B, which illustrates embodiments of a system 130 comprising a first ad hoc radio base station 100A and a second ad hoc radio base station 100B, FIG. 2D, and FIG. 2E, which illustrate an implementation of two simultaneous ad hoc cells 120A, 120B using the first ad hoc radio base station 100A and the second ad hoc radio base station 100B, and FIG. 4A and FIG. 4B, which illustrate embodiments of a method for implementing the two simultaneous ad hoc cells 120A, 120B.

As was explained earlier, the single ad hoc radio base station 100 implements two successive ad hoc cells 120+122 and 120+124 in a non-ending loop, whereby the LTE user apparatus 250 is kept being connected to the ad hoc cells 120+122 and 120+124 in succession. The system 130 with the two ad hoc radio base stations 100A, 100B implements two simultaneous ad hoc cells 120A, 120B, whereby the LTE user apparatus 250 is kept being connected to the simultaneous ad hoc cells 120A and 120B in succession.

The first ad hoc radio base station 100A and the second ad hoc radio base station 100B may have similar structure as the earlier described ad hoc radio base station 100, except the executed method/algorithm is naturally different. Consequently, the two ad hoc radio base stations 100A, 100B comprise one or more radio transceivers 102A, 102B and one or more processors 104A, 104B. The other reference signs 106A, 108A, 110A, 112A, 114A, 116A, 130A, 106B, 108B, 110B, 112B, 114B, 116B, and 130B also correspond to the earlier described 106, 108, 110, 112, 114, 116, and 130.

Let us study the dynamics of the method/algorithm with reference to FIG. 4A for the main sequence, and FIG. 4B illustrating optional embodiments. The method starts in 400 and ends in 432.

As shown in FIG. 4A, the operations are divided between the operations 402-410 of the first ad hoc base station 100A on the left side, and the operations 412-430 of the second ad hoc base station 100B on the right side.

The first operation phase, wherein the ad hoc radio base stations 100A, 100B are preparing for the actual operation is not repeated here as it basically corresponds to that described with reference to FIG. 2A.

FIG. 2D illustrates a second operation phase, wherein the ad hoc radio base stations 100A, 100B set up the simultaneous ad hoc LTE cells 120A, 120B.

In 402, the first ad hoc radio base station 100A sets up a first ad hoc LTE cell 120A on a first channel number with a first TAC.

In 412, the second ad hoc radio base station 100B sets up a second ad hoc LTE cell 120B on a second channel number with a second TAC. Note that the PCID may be the same or different for the first and second ad hoc LTE cells 120A, 120B, because the cells 120A, 120B are on different frequencies.

In an embodiment, the operations 402 and 412 are performed simultaneously so that the first ad hoc LTE cell 120A and the second ad hoc LTE cell 120B coexist.

The first channel number and the second channel number may be selected such that they are not in use in the adjacent existing LTE cells 212, 222.

In an embodiment, the first channel number is defined as a first EARFCN, and the second channel number is defined as a second EARFCN.

FIG. 2D also illustrates a third operation phase, wherein the first ad hoc LTE cell 120A starts to serve the LTE user apparatus 250. Instead of providing full service with data and/or speech transmission, the first ad hoc LTE cell 120A keeps the LTE user apparatus 250 connected so that appropriate surveillance operations may be performed. As shown in FIG. 2D, the LTE user apparatus 250 may receive transmissions 214, 224 from the existing LTE base stations 210, 220, but a transmission 280 from the first ad hoc LTE base station 100A is received with a higher power and/or a better quality at the LTE user apparatus 250, which causes that the LTE user apparatus 250 connects 282 to the first ad hoc LTE base station 100A.

In 406, the first ad hoc radio base station 100A, sets up a first radio connection 280, 282 in the first ad hoc LTE cell 120A to an LTE user apparatus 250 using a first RACH procedure. In an embodiment, a transmission power of the first ad hoc LTE cell 120A is set such that LTE user apparatuses 250 residing in the first ad hoc LTE cell 120A inevitably connect to the first ad hoc LTE cell 120A (instead of the LTE cells 212, 222 of the existing cellular radio network 200, and instead of the second ad hoc LTE cell 120B).

In 410, the first ad hoc radio base station 100A transmits an RRC release message with a redirection to the second ad hoc LTE cell 120B in the first radio connection 280 to the LTE user apparatus 250.

In 416, the second ad hoc radio base station 100B sets up a second radio connection 290, 292 in the second ad hoc LTE cell 120B to the LTE user apparatus 250 using a second RACH procedure, because the first ad hoc LTE cell 120A transmitted the RRC release message with the redirection to the second ad hoc LTE cell 120B to the LTE user apparatus 250.

FIG. 2E illustrates this fourth operation phase, wherein the second ad hoc LTE cell 120B continues the serving of the LTE user apparatus 250

In 418, the second ad hoc radio base station 100B sets a NAS timer simultaneously with the setting up of the second radio connection 290, 292. In an embodiment, the NAS timer is set in 418 simultaneously with a setting of a NAS timer in the LTE user apparatus 250.

In 420, the second ad hoc radio base station 100B repeats the operations 424-426 until a predetermined period of time remains before an expiry of the NAS timer. An optional operation may be performed in 422 at the start of the sequence.

In an embodiment of 422, the second ad hoc radio base station 100B commands with a MAC control message in the second radio connection 290 the LTE user apparatus 250 to use full buffer in all uplink messages of the second radio connection 292.

In 424, the second ad hoc radio base station 100B forces the LTE user apparatus 250 to send uplink messages in the second radio connection 292 by sending to the LTE user apparatus 250 one of a Radio Resource Control User Equipment, RRC UE, capability request message, an NAS identity request message, or an NAS security mode command message.

In 426, the second ad hoc radio base station 100B receives a reply message in the second radio connection 292 from the LTE user apparatus 250.

In 430, during, the predetermined period of time 428 before the expiry of the NAS timer, the second ad hoc radio base station 100B transmits an RRC release message with a redirection to the first ad hoc LTE cell 120A in the second radio connection 290 to the LTE user apparatus 250.

After 430, the first ad hoc radio base station 100A continues performance from the setting up of the first radio connection 280, 282 in the first ad hoc LTE cell 120A to the LTE user apparatus 250 using the first RACH procedure in 406.

The sequence 406-408-410-412-416-418-420-422-424-426-428-430 may be continued as long as needed to keep the LTE user apparatus 250 connected to the simultaneous ad hoc LTE cells 120A and 120B in turns.

In an embodiment, the first ad hoc LTE cell 120A is set up in 402 on the first channel number using also a first GCID, and the second ad hoc LTE cell 120B is set up in 412 on the second channel number using also a second GCID.

In an embodiment, during the predetermined period of time 428 before the expiry of the NAS timer, and before transmitting the RRC release message with the redirection to the first ad hoc LTE cell 120A in the second radio connection 290 to the LTE user apparatus 250 in 410, the second ad hoc base station 100B transmits in 408 an NAS reject message with a network failure or congestion as the cause in the second radio connection 290 to the LTE user apparatus 250.

In an embodiment, after the second ad hoc base station 100B receives the reply message in the second radio connection 292 from the LTE user apparatus 250 in 426, the second ad hoc base station 100B calculates in 450 a distance estimate to the LTE user apparatus 250 based on a current uplink timing advance value of the second radio connection 292. Note that the second ad hoc base station 100B may also calculate in 440 a distance estimate to the LTE user apparatus 250 as a first operation within the repeat loop 420 based on a current uplink timing advance value of the radio connection 292.

In an embodiment, after the second ad hoc base station 100B receives the reply message in the second radio connection 292 from the LTE user apparatus 250 in 426, the second ad hoc base station 100B checks in 442 whether a predetermined amount of time starting from a previous RACH procedure has passed during the predetermined period of time. If the predetermined amount of time has passed (the test in 442 evaluates "YES"), the second ad hoc base station 100B transmits in 444 an L1 PDCCH order message in the radio connection 290 to the LTE user apparatus 250, and a new RACH procedure with the LTE user apparatus 250 is performed in 446 to set up the second radio connection 290, 292 in the second ad hoc LTE cell 120B to the LTE user apparatus 250. In an embodiment, a distance estimate to the LTE user apparatus 250 is calculated based on the new RACH procedure setting up the second radio connection 290, 292.

It will be appreciated that some embodiments described herein may include one or more generic or specialized processors ("one or more processors") such as microprocessors; central processing units (CPUs); digital signal processors (DSPs): customized processors such as network processors (NPs) or network processing units (NPUs), graphics processing units (GPUs), or the like; field programmable gate arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more application-specific integrated circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer-readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a read-only memory (ROM), a programmable read-only memory (PROM), an erasable programmable read-only memory (EPROM), an electrically erasable programmable read-only memory (EEPROM), Flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. An ad hoc radio base station (100), comprising:
one or more radio transceivers (102) configured to receive and transmit in a Long-Term Evolution, LTE, cellular radio network; and
means (104) for:
setting (302) up an ad hoc LTE cell on a channel number with a Physical Cell ID, PCID, and a Tracking Area Code, TAC;
setting (306) up a radio connection in the ad hoc LTE cell to an LTE user apparatus using a Random Access Channel, RACH, procedure;
setting (308) a Non-Access Stratum, NAS, timer simultaneously with the setting up of the radio connection; **characterized by**
repeating (310) the following three steps until a predetermined period of time remains before an expiry of the NAS timer:
commanding (312) with a Medium Access Control, MAC, control message in the radio connection the LTE user apparatus to use full buffer in all uplink messages of the radio connection;
forcing (314) the LTE user apparatus to send uplink messages in the radio connection by sending to the LTE user apparatus one of a Radio Resource Control User Equipment, RRC UE, capability request message, an NAS identity request message, or an NAS security mode command message; and
receiving (316) a reply message to the one of a Radio Resource Control User Equipment (RRC UE) capability request message, an NAS identity request message, or an NAS security mode command message in the radio connection from the LTE user apparatus;
during (318) the predetermined period of time before the expiry of the NAS timer:
restarting (320) the ad hoc LTE cell on the channel number with a different PCID, and a different TAC than in the previous radio connection; and
continuing performance from the setting (306) up of the radio connection with the different PCID, and the different TAC in the ad hoc LTE cell to the LTE user apparatus using the RACH procedure.

2. The ad hoc radio base station of claim 1, further comprising means (104) for:
after receiving (316) the reply message in the radio connection from the LTE user apparatus, calculating (340) a distance estimate to the LTE user apparatus based on a current uplink timing advance value of the radio connection.

3. The ad hoc radio base station of claim 1, further comprising means (104) for:
after receiving (316) the reply message in the radio connection from the LTE user apparatus, checking (332) whether a predetermined amount of time starting from a previous RACH procedure has passed during the predetermined period of time, and if the predetermined amount of time has passed (332-YES), transmitting (334) a Layer 1 Physical Downlink Control Channel, L1 PDCCH, order message in the radio connection to the LTE user apparatus, and performing (336) a new RACH procedure with the LTE user apparatus to set up the radio connection in the ad hoc LTE cell to the LTE user apparatus.

4. The ad hoc radio base station of claim 3, further comprising means (104) for:
calculating (338) a distance estimate to the LTE user apparatus based on the new RACH procedure setting up the radio connection.

5. The ad hoc radio base station of claim 1, further comprising means (104) for:
during (318) the predetermined period of time before the expiry of the NAS timer:
before restarting (320) the ad hoc LTE cell on the channel number with the different PCID, and the different TAC than in the previous radio connection, transmitting (342) an NAS reject message with a network failure or congestion as the cause in the radio connection to the LTE user apparatus.

6. The ad hoc radio base station of claim 1, wherein the ad hoc LTE cell is set (302) up on the channel number using also a Global Cell ID, GCID, and the ad hoc LTE cell is restarted (320) on the channel number also with a different GCID than in the previous radio connection.

7. A system (130) comprising a first ad hoc radio base station (100A) and a second ad hoc radio base station (100B),
the first ad hoc radio base station (100A) comprising one or more radio transceivers (102A) configured to receive and transmit in a Long-Term Evolution, LTE, cellular radio network, and one or more processors (104A), and
the second ad hoc radio base station (100B) comprising one or more radio transceivers (102B) configured to receive and transmit in the LTE cellular radio network, and one or more processors (104B),
wherein the one or more processors (104A) of the first ad hoc radio base station (100A) are configured to cause performance of at least the following:
setting (402) up a first ad hoc LTE cell on a first channel number with a first Tracking Area Code, TAC;
setting (406) up a first radio connection in the first ad hoc LTE cell to an LTE user apparatus using a first Random Access Channel, RACH, procedure; and
transmitting (410) a Radio Resource Control, RRC, release message with a redirection to a second ad hoc LTE cell in the first radio connection to the LTE user apparatus,
wherein the one or more processors (104B) of the second ad hoc radio base station (100B) are configured to cause performance of at least the following:
setting (412) up a second ad hoc LTE cell on a second channel number with a second TAC;
setting (416) up a second radio connection in the second ad hoc LTE cell to the LTE user apparatus using a second RACH procedure, because the first ad hoc LTE cell transmitted the RRC release message with the redirection to the second ad hoc LTE cell to the LTE user apparatus;
setting (418) a Non-Access Stratum, NAS, timer simultaneously with the setting up of the second radio connection; **characterized by**
repeating (420) the following two steps until a predetermined period of time remains before an expiry of the NAS timer:
forcing (424) the LTE user apparatus to send uplink messages in the second radio connection by sending to the LTE user apparatus one of a Radio Resource Control User Equipment, RRC UE, capability request message, an NAS identity request message, or an NAS security mode command message; and
receiving (426) a reply message to the one of a Radio Resource Control User Equipment, RRC UE, capability request message, an NAS identity request message, or an NAS security mode command message in the second radio connection from the LTE user apparatus;
during (428) the predetermined period of time before the expiry of the NAS timer:
transmitting (430) an RRC release message with a redirection to the first ad hoc LTE cell in the second radio connection to the LTE user apparatus,
and wherein the one or more processors (104A) of the first ad hoc radio base station (100A) are configured to cause performance of at least the following:
continuing performance from the setting (406) up of the first radio connection in the first ad hoc LTE cell to the LTE user apparatus using the first RACH procedure.

8. The system of claim 7, wherein the one or more processors (104B) of the second ad hoc radio base station (100B) are configured to cause performance of the following:
after receiving (426) the reply message in the second radio connection from the LTE user apparatus, calculating (450) a distance estimate to the LTE user apparatus based on a current uplink timing advance value of the second radio connection.

9. The system of claim 7, wherein the one or more processors (104B) of the second ad hoc radio base station (100B) are configured to cause performance of the following:
after receiving (426) the reply message in the second radio connection from the LTE user apparatus, checking (442) whether a predetermined amount of time starting from a previous RACH procedure in the second ad hoc LTE cell has passed during the predetermined period of time, and if the predetermined amount of time has passed (442-YES), transmitting (444) a Layer 1 Physical Downlink Control Channel, L1 PDCCH, order message in the second radio connection to the LTE user apparatus, and performing (446) a new RACH procedure with the LTE user apparatus to set up the second radio connection in the second ad hoc LTE cell to the LTE user apparatus.

10. The system of claim 9, wherein the one or more processors (104B) of the second ad hoc radio base station (100B) are configured to cause performance of the following:
calculating (448) a distance estimate to the LTE user apparatus based on the new RACH procedure setting up the second radio connection.

11. The system of claim 7, wherein the one or more processors (104B) of the second ad hoc radio base station (100B) are configured to cause performance of the following:
during (428) the predetermined period of time before the expiry of the NAS timer:
before transmitting (410) the RRC release message with the redirection to the first ad hoc LTE cell in the second radio connection to the LTE user apparatus, transmitting (408) an NAS reject message with a network failure or congestion as the cause in the second radio connection to the LTE user apparatus.

12. The system of claim 7, wherein the one or more processors (104B) of the second ad hoc radio base station (100B) are configured to cause performance of the following:
before forcing (424) the LTE user apparatus to send uplink messages in the second radio connection by sending to the LTE user apparatus one of the RRC UE, capability request message, the NAS identity request message, or the NAS security mode command message, commanding (422) with a Medium Access Control, MAC, control message in the second radio connection the LTE user apparatus to use full buffer in all uplink messages of the second radio connection.

13. A method performed by an ad hoc base station (100) for implementing two successive ad hoc cells, comprising:
setting (302) up, by using one or more radio transceivers configured to receive and transmit in a Long-Term Evolution, LTE, cellular radio network, an ad hoc LTE cell on a channel number with a Physical Cell ID, PCID, and a Tracking Area Code, TAC,
setting (306) up a radio connection in the ad hoc LTE cell to an LTE user apparatus using a Random Access Channel, RACH, procedure;
setting (308) a Non-Access Stratum, NAS, timer simultaneously with the setting up of the radio connection; **characterized by**
repeating (310) the following three steps until a predetermined period of time remains before an expiry of the NAS timer:
commanding (312) with a Medium Access Control, MAC, control message in the radio connection the LTE user apparatus to use full buffer in all uplink messages of the radio connection;
forcing (314) the LTE user apparatus to send uplink messages in the radio connection by sending to the LTE user apparatus one of a Radio Resource Control User Equipment, RRC UE, capability request message, an NAS identity request message, or an NAS security mode command message; and
receiving (316) a reply message to the one of a Radio Resource Control User Equipment (RRC UE) capability request message, an NAS identity request message, or an NAS security mode command message in the radio connection from the LTE user apparatus;
during (318) the predetermined period of time before the expiry of the NAS timer:
restarting (320) the ad hoc LTE cell on the channel number with a different PCID, and a different TAC than in the previous radio connection; and
continuing performance from the setting (306) up of the radio connection with the different PCID, and the different TAC in the ad hoc LTE cell to the LTE user apparatus using the RACH procedure.

14. A method for implementing two simultaneous ad hoc cells performed by a system, the system comprising a first ad hoc base station (100A) and a second ad hoc base station (100B), comprising:
the first ad hoc base station (100A) setting (402) up, by using one or more radio transceivers configured to receive and transmit in a Long-Term Evolution, LTE, cellular radio network, a first ad hoc LTE cell on a first channel number with a first Tracking Area Code, TAC;
the second ad hoc base station (100B) setting (412) up, by using one or more radio transceivers configured to receive and transmit in the LTE cellular radio network, a second ad hoc LTE cell on a second channel number with a second TAC;
the first ad hoc base station (100A) setting (406) up a first radio connection in the first ad hoc LTE cell to an LTE user apparatus using a first Random Access Channel, RACH, procedure; and
the first ad hoc base station (100A) transmitting (410) a Radio Resource Control, RRC, release message with a redirection to a second ad hoc LTE cell in the first radio connection to the LTE user apparatus,
the second ad hoc base station (100B) setting (416) up a second radio connection in the second ad hoc LTE cell to the LTE user apparatus using a second RACH procedure, because the first ad hoc LTE cell transmitted the RRC release message with the redirection to the second ad hoc LTE cell to the LTE user apparatus;
the second ad hoc base station (100B) setting (418) a Non-Access Stratum, NAS, timer simultaneously with the setting up of the second radio connection; **characterized by**
the second ad hoc base station (100B) repeating (420) the following two steps until a predetermined period of time remains before an expiry of the NAS timer:
the second ad hoc base station (100B) forcing (424) the LTE user apparatus to send uplink messages in the second radio connection by sending to the LTE user apparatus one of a Radio Resource Control User Equipment, RRC UE, capability request message, an NAS identity request message, or an NAS security mode command message; and
the second ad hoc base station (100B) receiving (426) a reply message to the one of a Radio Resource Control User Equipment (RRC UE) capability request message, an NAS identity request message, or an NAS security mode command message in the second radio connection from the LTE user apparatus;
during (428) the predetermined period of time before the expiry of the NAS timer:
the second ad hoc base station (100B) transmitting (430) an RRC release message with a redirection to the first ad hoc LTE cell in the second radio connection to the LTE user apparatus; and
the first ad hoc base station (100A) continuing performance from the setting (406) up of the first radio connection in the first ad hoc LTE cell to the LTE user apparatus using the first RACH procedure.

15. A computer-readable medium (112) comprising computer program code (110), which, when executed by one or more microprocessors (106) of an ad hoc base station (100), cause said ad hoc base station to perform a method for implementing two successive ad hoc cells, comprising:
setting (302) up, by using one or more radio transceivers configured to receive and transmit in a Long-Term Evolution, LTE, cellular radio network, an ad hoc LTE cell on a channel number with a Physical Cell ID, PCID, and a Tracking Area Code, TAC,
setting (306) up a radio connection in the ad hoc LTE cell to an LTE user apparatus using a Random Access Channel, RACH, procedure;
setting (308) a Non-Access Stratum, NAS, timer simultaneously with the setting up of the radio connection; **characterized by**
repeating (310) the following three steps until a predetermined period of time remains before an expiry of the NAS timer:
commanding (312) with a Medium Access Control, MAC, control message in the radio connection the LTE user apparatus to use full buffer in all uplink messages of the radio connection;
forcing (314) the LTE user apparatus to send uplink messages in the radio connection by sending to the LTE user apparatus one of a Radio Resource Control User Equipment, RRC UE, capability request message, an NAS identity request message, or an NAS security mode command message; and
receiving (316) a reply message to the one of a Radio Resource Control User Equipment (RRC UE) capability request message, an NAS identity request message, or an NAS security mode command message in the radio connection from the LTE user apparatus;
during (318) the predetermined period of time before the expiry of the NAS timer:
restarting (320) the ad hoc LTE cell on the channel number with a different PCID, and a different TAC than in the previous radio connection; and
continuing performance from the setting (306) up of the radio connection with the different PCID, and the different TAC in the ad hoc LTE cell to the LTE user apparatus using the RACH procedure.

## Patentansprüche

1. Ad-hoc-Funkbasisstation (100), umfassend:
einen oder mehrere Funk-Transceiver (102), die dazu konfiguriert sind, in einem Long-Term-Evolution-, LTE, Mobilfunknetz zu empfangen und zu senden; und
Mittel (104) zum:
Einrichten (302) einer Ad-hoc-LTE-Zelle auf einer Kanalnummer mit einer physikalischen Zellenidentität, PCID, und einer Verfolgungsvorwahl, TAC;
Einrichten (306) einer Funkverbindung in der Ad-hoc-LTE-Zelle mit einem LTE-Benutzergerät unter Verwendung einer Direktzugriffskanal-, RACH, Prozedur;
Einstellen (308) eines Nicht-Zugriffsschicht-, NAS, Zeitgebers gleichzeitig mit dem Einrichten der Funkverbindung;
**gekennzeichnet durch**
Wiederholen (310) der folgenden drei Schritte, bis ein vorbestimmter Zeitraum vor einem Ablaufen des NAS-Zeitgebers verbleibt:
dem LTE-Benutzergerät mit einer Medienzugriffssteuerungs- , MAC, Steuernachricht in der Funkverbindung Befehlen (312), bei allen Uplink-Nachrichten der Funkverbindung den gesamten Zwischenspeicher zu verwenden;
Zwingen (314) des LTE-Benutzergeräts, Uplink-Nachrichten in der Funkverbindung durch Senden an das LTE-Benutzergerät einer von einer Kapazitätsanfragenachricht eines Endgeräts zur Funkressourcensteuerung, RRC UE, einer NAS-Identitätsanfragenachricht oder einer NAS-Sicherheitsmodus-Befehlsnachricht zu senden; und
Empfangen (316) von dem LTE-Benutzergerät einer Antwortnachricht auf die eine von einer Kapazitätsanfragenachricht eines Endgeräts zur Funkressourcensteuerung, RRC UE, einer NAS-Identitätsanfragenachricht oder einer NAS-Sicherheitsmodus-Befehlsnachricht in der Funkverbindung;
während (318) des vorbestimmten Zeitraums vor dem Ablaufen des NAS-Zeitgebers:
Neustarten (320) der Ad-hoc-LTE-Zelle auf der Kanalnummer mit einer anderen PCID und einer anderen TAC als bei der vorherigen Funkverbindung; und
Fortsetzen des Ausführens von dem Einrichten (306) der Funkverbindung mit der anderen PCID und der anderen TAC in der Ad-hoc-LTE-Zelle mit dem LTE-Benutzergerät unter Verwendung der RACH-Prozedur ab.

2. Ad-hoc-Funkbasisstation nach Anspruch 1, ferner umfassend Mittel (104) zum:
nach dem Empfangen (316) der Antwortnachricht in der Funkverbindung von dem LTE-Benutzergerät, Berechnen (340) einer Abstandsschätzung zu dem LTE-Benutzergerät basierend auf einem aktuellen Uplink-Timing-Advance-Wert der Funkverbindung.

3. Ad-hoc-Funkbasisstation nach Anspruch 1, ferner umfassend Mittel (104) zum:
nach dem Empfangen (316) der Antwortnachricht in der Funkverbindung von dem LTE-Benutzergerät, Überprüfen (332), ob eine vorbestimmte Zeitspanne ausgehend von einer vorherigen RACH-Prozedur während des vorherbestimmten Zeitraums verstrichen ist, und falls die vorherbestimmte Zeitspanne verstrichen ist (332-JA), Senden (334) an das LTE-Benutzergerät einer Reihenfolge-Nachricht eines physikalischen Downlink-Steuerkanals der Schicht 1, L1 PDCCH, in der Funkverbindung, und Ausführen (336) einer neuen RACH-Prozedur mit dem LTE-Benutzergerät, um die Funkverbindung in der Ad-hoc-LTE-Zelle mit dem LTE-Benutzergerät einzurichten.

4. Ad-hoc-Funkbasisstation nach Anspruch 3, ferner umfassend Mittel (104) zum:
Berechnen (338) einer Abstandsschätzung zu dem LTE-Benutzergerät basierend darauf, dass die neue RACH-Prozedur die Funkverbindung einrichtet.

5. Ad-hoc-Funkbasisstation nach Anspruch 1, ferner umfassend Mittel (104) zum:
während (318) des vorbestimmten Zeitraums vor dem Ablaufen des NAS-Zeitgebers:
vor dem Neustarten (320) der Ad-hoc-LTE-Zelle auf der Kanalnummer mit der anderen PCID und der anderen TAC als bei der vorherigen Funkverbindung, Senden (342) an das LTE-Benutzergerät einer NAS-Ablehnungsnachricht mit einem Netzwerkausfall oder einer Netzwerküberlastung als Ursache bei der Funkverbindung.

6. Ad-hoc-Funkbasisstation nach Anspruch 1, wobei die Ad-hoc-LTE-Zelle auf der Kanalnummer unter Verwendung auch einer globalen Zellen-ID, GCID, eingerichtet (302) wird, und die Ad-hoc-LTE-Zelle auf der Kanalnummer auch mit einer anderen GCID als bei der vorherigen Funkverbindung neugestartet (320) wird.

7. System (130), umfassend eine erste Ad-hoc-Funkbasisstation (100A) und eine zweite Ad-hoc-Funkbasisstation (100B),
wobei die erste Ad-hoc-Funkbasisstation (100A) einen oder mehrere Funk-Transceiver (102A), die dazu konfiguriert sind, in einem Long-Term Evolution, LTE, Mobilfunknetz zu empfangen und zu senden, und einen oder mehrere Prozessoren (104A) umfasst, und
wobei die zweite Ad-hoc-Funkbasisstation (100B) einen oder mehrere Funk-Transceiver (102B), die dazu konfiguriert sind, in dem LTE-Mobilfunknetz zu empfangen und zu senden, und einen oder mehrere Prozessoren (104B) umfasst,
wobei der eine oder die mehreren Prozessoren (104A) der ersten Ad-hoc-Funkbasisstation (100A) dazu konfiguriert sind, das Ausführen mindestens eines der folgenden Schritte zu bewirken:
Einrichten (402) einer ersten Ad-hoc-LTE-Zelle auf einer ersten Kanalnummer mit einer ersten Verfolgungsvorwahl, TAC;
Einrichten (406) einer ersten Funkverbindung in der ersten Ad-hoc-LTE-Zelle mit einem LTE-Benutzergerät unter Verwendung einer ersten Direktzugriffskanal-, RACH, Prozedur; und
Senden (410) an das LTE-Benutzergerät einer Funkressourcensteuerungs-, RRC, Freigabenachricht mit einer Umleitung auf eine zweite Ad-hoc-LTE-Zelle in der ersten Funkverbindung,
wobei der eine oder die mehreren Prozessoren (104B) der zweiten Ad-hoc-Funkbasisstation (100B) dazu konfiguriert sind, das Ausführen mindestens eines der folgenden Schritte zu bewirken:
Einrichten (412) einer zweiten Ad-hoc-LTE-Zelle auf einer zweiten Kanalnummer mit einer zweiten TAC;
Einrichten (416) einer zweiten Funkverbindung in der zweiten Ad-hoc-LTE-Zelle mit dem LTE-Benutzergerät unter Verwendung einer zweiten RACH-Prozedur, weil die erste Ad-hoc-LTE-Zelle die RRC-Freigabenachricht mit der Umleitung auf die zweite Ad-hoc-LTE-Zelle an das LTE-Benutzergerät gesendet hat;
Einrichten (418) eines Nicht-Zugriffsschicht-, NAS, Zeitgebers gleichzeitig mit dem Einrichten der zweiten Funkverbindung;
**gekennzeichnet durch**
Wiederholen (420) der folgenden beiden Schritte, bis ein vorbestimmter Zeitraum vor einem Ablaufen des NAS-Zeitgebers verbleibt:
Zwingen (424) des LTE-Benutzergeräts, Uplink-Nachrichten in der zweiten Funkverbindung durch Senden an das LTE-Benutzergerät einer von einer Kapazitätsanfragenachricht eines Endgeräts zur Funkressourcensteuerung, RRC UE, einer NAS-Identitätsanfragenachricht oder einer NAS-Sicherheitsmodus-Befehlsnachricht zu senden; und
Empfangen (426) von dem LTE-Benutzergerät einer Antwortnachricht auf die eine von einer Kapazitätsanfragenachricht eines Endgeräts zur Funkressourcensteuerung, RRC UE, einer NAS-Identitätsanfragenachricht oder einer NAS-Sicherheitsmodus-Befehlsnachricht in der zweiten Funkverbindung;
während (428) des vorbestimmten Zeitraums vor dem Ablaufen des NAS-Zeitgebers:
Senden (430) an das LTE-Benutzergerät einer RRC-Freigabenachricht mit einer Umleitung auf die erste Ad-hoc-LTE-Zelle in der zweiten Funkverbindung,
und wobei der eine oder die mehreren Prozessoren (104A) der ersten Ad-hoc-Funkbasisstation (100A) dazu konfiguriert sind, das Ausführen mindestens eines der folgenden Schritte zu bewirken:
Fortsetzen des Ausführens von dem Einrichten (406) der ersten Funkverbindung in der ersten Ad-hoc-LTE-Zelle mit dem LTE-Benutzergerät unter Verwendung der ersten RACH-Prozedur ab.

8. System nach Anspruch 7, wobei der eine oder die mehreren Prozessoren (104B) der zweiten Ad-hoc-Funkbasisstation (100B) dazu konfiguriert sind, das Ausführen der folgenden Schritte zu bewirken:
nach dem Empfangen (426) der Antwortnachricht in der zweiten Funkverbindung von dem LTE-Benutzergerät, Berechnen (450) einer Abstandsschätzung zu dem LTE-Benutzergerät basierend auf einem aktuellen Uplink-Timing-Advance-Wert der zweiten Funkverbindung.

9. System nach Anspruch 7, wobei der eine oder die mehreren Prozessoren (104B) der zweiten Ad-hoc-Funkbasisstation (100B) dazu konfiguriert sind, das Ausführen der folgenden Schritte zu bewirken:
nach dem Empfangen (426) von dem LTE-Benutzergerät der Antwortnachricht in der zweiten Funkverbindung, Überprüfen (442), ob eine vorbestimmte Zeitspanne ausgehend von einer vorherigen RACH-Prozedur in der zweiten Ad-hoc-LTE-Zelle während des vorherbestimmten Zeitraums verstrichen ist, und falls die vorherbestimmte Zeitspanne verstrichen ist (442-JA), Senden (444) an das LTE-Benutzergerät einer Reihenfolge-Nachricht eines physikalischen Downlink-Steuerkanals der Schicht 1, L1 PDCCH, in der zweiten Funkverbindung, und Ausführen (446) einer neuen RACH-Prozedur mit dem LTE-Benutzergerät, um die zweite Funkverbindung in der zweiten Ad-hoc-LTE-Zelle mit dem LTE-Benutzergerät einzurichten.

10. System nach Anspruch 9, wobei der eine oder die mehreren Prozessoren (104B) der zweiten Ad-hoc-Funkbasisstation (100B) dazu konfiguriert sind, das Ausführen des folgenden Schritts zu bewirken:
Berechnen (448) einer Abstandsschätzung zu dem LTE-Benutzergerät basierend darauf, dass die neue RACH-Prozedur die zweite Funkverbindung einrichtet.

11. System nach Anspruch 7, wobei der eine oder die mehreren Prozessoren (104B) der zweiten Ad-hoc-Funkbasisstation (100B) dazu konfiguriert sind, das Ausführen der folgenden Schritte zu bewirken:
während (428) des vorbestimmten Zeitraums vor dem Ablaufen des NAS-Zeitgebers:
vor dem Senden (410) an das LTE-Benutzergerät der RRC-Freigabenachricht mit der Umleitung auf die erste Ad-hoc-LTE-Zelle in der zweiten Funkverbindung, Senden (408) an das LTE-Benutzergerät einer NAS-Ablehnungsnachricht mit einem Netzwerkausfall oder einer Netzwerküberlastung als Ursache in der zweiten Funkverbindung.

12. System nach Anspruch 7, wobei der eine oder die mehreren Prozessoren (104B) der zweiten Ad-hoc-Funkbasisstation (100B) dazu konfiguriert sind, das Ausführen der folgenden Schritte zu bewirken:
vor dem Zwingen (424) des LTE-Benutzergeräts, Uplink-Nachrichten in der zweiten Funkverbindung durch Senden an das LTE-Benutzergerät einer von der RRC-UE-Kapazitätsanfragenachricht, der NAS-Identitätsanfragenachricht oder der NAS-Sicherheitsmodus-Befehlsnachricht zu senden, dem LTE-Benutzergerät mit einer Medienzugriffssteuerungs-, MAC, Steuerungsnachricht in der zweiten Funkverbindung Befehlen (422), in allen Uplink-Nachrichten der zweiten Funkverbindung den gesamten Zwischenspeicher zu verwenden.

13. Verfahren, das von einer Ad-hoc-Basisstation (100) zum Umsetzen von zwei aufeinanderfolgenden Ad-Hoc-Zellen ausgeführt wird, umfassend:
Einrichten (302) unter Verwendung eines oder mehrerer Funk-Transceiver, die dazu konfiguriert sind, in einem Long-Term Evolution, LTE, Mobilfunknetz zu empfangen und zu senden, einer Ad-hoc-LTE-Zelle auf einer Kanalnummer mit einer physikalischen Zellenidentität, PCID, und einer Verfolgungsvorwahl, TAC,
Einrichten (306) einer Funkverbindung in der Ad-hoc-LTE-Zelle mit einem LTE-Benutzergerät unter Verwendung einer Direktzugriffskanal-, RACH, Prozedur;
Einstellen (308) eines Nicht-Zugriffsschicht-, NAS, Zeitgebers gleichzeitig mit dem Einrichten der Funkverbindung;
**gekennzeichnet durch**
Wiederholen (310) der folgenden drei Schritte, bis ein vorbestimmter Zeitraum vor einem Ablaufen des NAS-Zeitgebers verbleibt:
dem LTE-Benutzergerät mit einer Medienzugriffssteuerungs- , MAC, Steuerungsnachricht in der Funkverbindung Befehlen (312), in allen Uplink-Nachrichten der Funkverbindung den gesamten Zwischenspeicher zu verwenden;
Zwingen (314) des LTE-Benutzergeräts, Uplink-Nachrichten in der Funkverbindung durch Senden an das LTE-Benutzergerät einer von einer Kapazitätsanfragenachricht eines Endgeräts zur Funkressourcensteuerung, RRC UE, einer NAS-Identitätsanfragenachricht oder einer NAS-Sicherheitsmodus-Befehlsnachricht zu senden; und
Empfangen (316) von dem LTE-Benutzergerät einer Antwortnachricht auf die eine von einer Kapazitätsanfragenachricht eines Endgeräts zur Funkressourcensteuerung, RRC UE, einer NAS-Identitätsanfragenachricht oder einer NAS-Sicherheitsmodus-Befehlsnachricht in der Funkverbindung;
während (318) des vorbestimmten Zeitraums vor dem Ablaufen des NAS-Zeitgebers:
Neustarten (320) der Ad-hoc-LTE-Zelle auf der Kanalnummer mit einer anderen PCID und einer anderen TAC als bei der vorherigen Funkverbindung; und
Fortsetzen des Ausführens von dem Einrichten (306) der Funkverbindung mit der anderen PCID und der anderen TAC in der Ad-hoc-LTE-Zelle mit dem LTE-Benutzergerät unter Verwendung der RACH-Prozedur ab.

14. Verfahren zum Umsetzen von zwei gleichzeitigen Ad-hoc-Zellen, das von einem System ausgeführt wird, wobei das System eine erste Ad-hoc-Basisstation (100A) und eine zweite Ad-hoc-Basisstation (100B) umfasst, umfassend:
Einrichten (402), durch die erste Ad-hoc-Basisstation (100A), unter Verwendung eines oder mehrerer Funk-Transceiver, die dazu konfiguriert sind, in einem Long-Term Evolution, LTE, Mobilfunknetz zu empfangen und zu senden, einer ersten Ad-hoc-LTE-Zelle auf einer ersten Kanalnummer mit einer ersten Verfolgungsvorwahl, TAC;
Einrichten (412), durch die zweite Ad-hoc-Basisstation (100B), unter Verwendung eines oder mehrerer Funk-Transceiver, die dazu konfiguriert sind, in dem LTE-Mobilfunknetz zu empfangen und zu senden, einer zweiten Ad-hoc-LTE-Zelle auf einer zweiten Kanalnummer mit einer zweiten TAC;
Einrichten (406), durch die erste Ad-hoc-Basisstation (100A), einer ersten Funkverbindung in der ersten Ad-hoc-LTE-Zelle mit einem LTE-Benutzergerät unter Verwendung einer ersten Direktzugriffskanal-, RACH, Prozedur; und
Senden (410) an das LTE-Benutzergerät, durch die erste Ad-hoc-Basisstation (100A), einer Funkressourcensteuerungs-, RRC, Freigabenachricht mit einer Umleitung auf eine zweite Ad-hoc-LTE-Zelle in der ersten Funkverbindung,
Einrichten (416), durch die zweite Ad-hoc-Basisstation (100B), einer zweiten Funkverbindung in der zweiten Ad-hoc-LTE-Zelle mit dem LTE-Benutzergerät unter Verwendung einer zweiten RACH-Prozedur, weil die erste Ad-hoc-LTE-Zelle die RRC-Freigabenachricht mit der Umleitung auf die zweite Ad-hoc-LTE-Zelle an das LTE-Benutzergerät gesendet hat;
Einrichten (418), durch die zweite Ad-hoc-Basisstation (100B), einer Nicht-Zugriffsschicht-, NAS, Zeitgeber gleichzeitig mit dem Einrichten der zweiten Funkverbindung;
**dadurch gekennzeichnet, dass**
die zweite Ad-hoc-Basisstation (100B) die folgenden beiden Schritte wiederholt (420), bis ein vorbestimmter Zeitraum vor einem Ablaufen des NAS-Zeitgebers verbleibt:
Zwingen (424) des LTE-Benutzergeräts, durch die zweite Ad-hoc-Basisstation (100B), Uplink-Nachrichten in der zweiten Funkverbindung durch Senden an das LTE-Benutzergerät einer von einer Kapazitätsanfragenachricht eines Endgeräts zur Funkressourcensteuerung, RRC UE, einer NAS-Identitätsanfragenachricht oder einer NAS-Sicherheitsmodus-Befehlsnachricht zu senden; und
Empfangen (426) von dem LTE-Benutzergerät, durch die zweite Ad-hoc-Basisstation (100B), einer Antwortnachricht auf die eine von einer Kapazitätsanfragenachricht eines Endgeräts zur Funkressourcensteuerung, RRC UE, einer NAS-Identitätsanfragenachricht oder einer NAS-Sicherheitsmodus-Befehlsnachricht, in der zweiten Funkverbindung;
während (428) des vorbestimmten Zeitraums vor dem Ablaufen des NAS-Zeitgebers:
Senden (430) an das LTE-Benutzergerät, durch die zweite Ad-hoc-Basisstation (100B), einer RRC-Freigabenachricht mit einer Umleitung auf die erste Ad-hoc-LTE-Zelle in der zweiten Funkverbindung; und
Fortsetzen, durch die erste Ad-hoc-Basisstation (100A), des Ausführens von dem Einrichten (406) der ersten Funkverbindung in der ersten Ad-hoc-LTE-Zelle mit dem LTE-Benutzergerät unter Verwendung der ersten RACH-Prozedur ab.

15. Computerlesbarer Datenträger (112), der Computerprogrammcode (110) umfasst, der, wenn er von einem oder mehreren Mikroprozessoren (106) einer Ad-hoc-Basisstation (100) ausgeführt wird, bewirkt, dass die Ad-hoc-Basisstation ein Verfahren zum Umsetzen von zwei aufeinanderfolgenden Ad-hoc-Zellen ausführt, umfassend:
Einrichten (302), unter Verwendung eines oder mehrerer Funk-Transceiver, die dazu konfiguriert sind, in einem Long-Term Evolution, LTE, Mobilfunknetz zu empfangen und zu senden, einer Ad-hoc-LTE-Zelle auf einer Kanalnummer mit einer physikalischen Zellenidentität, PCID, und einer Verfolgungsvorwahl, TAC,
Einrichten (306) einer Funkverbindung in der Ad-hoc-LTE-Zelle mit einem LTE-Benutzergerät unter Verwendung einer Direktzugriffskanal-, RACH, Prozedur;
Einstellen (308) eines Nicht-Zugriffsschicht-, NAS, Zeitgebers gleichzeitig mit dem Einrichten der Funkverbindung;
**gekennzeichnet durch**
Wiederholen (310) der folgenden drei Schritte, bis ein vorbestimmter Zeitraum vor einem Ablaufen des NAS-Zeitgebers verbleibt:
dem LTE-Benutzergerät mit einer Medienzugriffssteuerungs-, MAC, Steuernachricht in der Funkverbindung Befehlen (312), in allen Uplink-Nachrichten der Funkverbindung den gesamten Zwischenspeicher zu verwenden;
Zwingen (314) des LTE-Benutzergeräts, Uplink-Nachrichten in der Funkverbindung durch Senden an das LTE-Benutzergerät einer von einer Kapazitätsanfragenachricht eines Endgeräts zur Funkressourcensteuerung, RRC UE, einer NAS-Identitätsanfragenachricht oder einer NAS-Sicherheitsmodus-Befehlsnachricht zu senden; und
Empfangen (316) von dem LTE-Benutzergerät einer Antwortnachricht auf die eine von der Kapazitätsanfragenachricht eines Endgeräts zur Funkressourcensteuerung, RRC UE, einer NAS-Identitätsanfragenachricht oder einer NAS-Sicherheitsmodus-Befehlsnachricht in der Funkverbindung;
während (318) des vorbestimmten Zeitraums vor dem Ablaufen des NAS-Zeitgebers:
Neustarten (320) der Ad-hoc-LTE-Zelle auf der Kanalnummer mit einer anderen PCID und einer anderen Vorwahl als bei der vorherigen Funkverbindung; und
Fortsetzen des Ausführens von dem Einrichten (306) der Funkverbindung mit der anderen PCID und der anderen TAC in der Ad-hoc-LTE-Zelle mit dem LTE-Benutzergerät unter Verwendung der RACH-Prozedur ab.

## Revendications

1. Station de base radio ad hoc (100), comprenant :
un ou plusieurs émetteurs-récepteurs radio (102) configurés pour recevoir et émettre dans un réseau radio cellulaire d'évolution à long terme, LTE ; et
des moyens (104) pour :
mettre en place (302) une cellule LTE ad hoc sur un numéro de canal avec un ID de cellule physique, PCID, et un code de zone de suivi, TAC ;
mettre en place (306) une connexion radio dans la cellule LTE ad hoc à un appareil utilisateur LTE en utilisant une procédure de canal d'accès aléatoire, RACH ;
établir (308) un temporisateur de strate de non-accès, NAS, simultanément à la mise en place de la connexion radio ; **caractérisée par** ce qui suit
répéter (310) les trois étapes suivantes jusqu'à ce qu'il reste une période de temps prédéterminée avant une expiration du temporisateur NAS :
avec un message de contrôle de contrôle d'accès au support, MAC, dans la connexion radio, commander (312) à l'appareil utilisateur LTE d'utiliser une mémoire tampon complète dans tous les messages de liaison montante de la connexion radio ;
forcer (314) l'appareil utilisateur LTE à envoyer des messages de liaison montante dans la connexion radio en envoyant à l'appareil utilisateur LTE un message de demande de capacité d'équipement utilisateur de contrôle de ressources radio, RRC UE, un message de demande d'identité NAS ou un message de commande de mode de sécurité NAS ; et
recevoir (316) de l'appareil utilisateur LTE un message de réponse au message de demande de capacité d'équipement utilisateur de contrôle de ressources radio (RRC UE), au message de demande d'identité NAS ou au message de commande de mode de sécurité NAS dans la connexion radio ;
pendant (318) la période de temps prédéterminée avant l'expiration du temporisateur NAS :
redémarrer (320) la cellule LTE ad hoc sur le numéro de canal avec un PCID différent et un TAC différent de ceux de la connexion radio précédente ; et
poursuivre la réalisation à partir de la mise en place (306) de la connexion radio avec le PCID différent et le TAC différent dans la cellule LTE ad hoc à l'appareil utilisateur LTE en utilisant la procédure RACH.

2. Station de base radio ad hoc selon la revendication 1, comprenant en outre des moyens (104) pour :
après avoir reçu (316) de l'appareil utilisateur LTE le message de réponse dans la connexion radio, calculer (340) une estimation de distance par rapport à l'appareil utilisateur LTE sur la base d'une valeur d'avance de temporisation de liaison montante actuelle de la connexion radio.

3. Station de base radio ad hoc selon la revendication 1, comprenant en outre des moyens (104) pour :
après avoir reçu (316) de l'appareil utilisateur LTE le message de réponse dans la connexion radio, vérifier (332) si un délai prédéterminé à partir d'une procédure RACH précédente s'est écoulé pendant la période de temps prédéterminée, et si le délai prédéterminé s'est écoulé (332-YES), transmettre (334) un message d'instruction de canal physique de contrôle de liaison descendante de couche 1, L1 PDCCH, dans la connexion radio à l'appareil utilisateur LTE, et réaliser (336) une nouvelle procédure RACH avec l'appareil utilisateur LTE pour mettre en place la connexion radio dans la cellule LTE ad hoc à l'appareil utilisateur LTE.

4. Station de base radio ad hoc selon la revendication 3, comprenant en outre des moyens (104) pour :
calculer (338) une estimation de distance par rapport à l'appareil utilisateur LTE sur la base de la mise en place de la connexion radio par la nouvelle procédure RACH.

5. Station de base radio ad hoc selon la revendication 1, comprenant en outre des moyens (104) pour :
pendant (318) la période de temps prédéterminée avant l'expiration du temporisateur NAS :
avant de redémarrer (320) la cellule LTE ad hoc sur le numéro de canal avec le PCID différent et le TAC différent de ceux de la connexion radio précédente, transmettre (342) un message de rejet NAS avec une panne ou une congestion de réseau comme cause dans la connexion radio à l'appareil utilisateur LTE.

6. Station de base radio ad hoc selon la revendication 1, dans laquelle la cellule LTE ad hoc est mise en place (302) sur le numéro de canal en utilisant également un ID de cellule global, GCID, et la cellule LTE ad hoc est redémarrée (320) sur le numéro de canal également avec un GCID différent de celui de la connexion radio précédente.

7. Système (130) comprenant une première station de base radio ad hoc (100A) et une deuxième station de base radio ad hoc (100B),
la première station de base radio ad hoc (100A) comprenant un ou plusieurs émetteurs-récepteurs radio (102A) configurés pour recevoir et émettre dans un réseau radio cellulaire d'évolution à long terme, LTE, et un ou plusieurs processeurs (104A), et
la deuxième station de base radio ad hoc (100B) comprenant un ou plusieurs émetteurs-récepteurs radio (102B) configurés pour recevoir et émettre dans le réseau radio cellulaire LTE, et un ou plusieurs processeurs (104B),
dans lequel les un ou plusieurs processeurs (104A) de la première station de base radio ad hoc (100A) sont configurés pour provoquer la réalisation d'au moins une des étapes suivantes :
mettre en place (402) une première cellule LTE ad hoc sur un premier numéro de canal avec un premier code de zone de suivi, TAC ;
mettre en place (406) une première connexion radio dans la première cellule LTE ad hoc à un appareil utilisateur LTE en utilisant une première procédure de canal d'accès aléatoire, RACH ; et
transmettre (410) un message de libération de contrôle de ressource radio, RRC, avec une redirection vers une deuxième cellule LTE ad hoc dans la première connexion radio à l'appareil utilisateur LTE,
dans lequel les un ou plusieurs processeurs (104B) de la deuxième station de base radio ad hoc (100B) sont configurés pour provoquer la réalisation d'au moins une des étapes suivantes :
mettre en place (412) une deuxième cellule LTE ad hoc sur un deuxième numéro de canal avec un deuxième TAC ;
mettre en place (416) une deuxième connexion radio dans la deuxième cellule LTE ad hoc à l'appareil utilisateur LTE en utilisant une deuxième procédure RACH, parce que la première cellule LTE ad hoc a transmis à l'appareil utilisateur LTE le message de libération RRC avec la redirection vers la deuxième cellule LTE ad hoc ;
établir (418) un temporisateur de strate de non-accès, NAS, simultanément à la mise en place de la deuxième connexion radio ; **caractérisé par** ce qui suit
répéter (420) les deux étapes suivantes jusqu'à ce qu'il reste une période de temps prédéterminée avant une expiration du temporisateur NAS :
forcer (424) l'appareil utilisateur LTE à envoyer des messages de liaison montante dans la deuxième connexion radio en envoyant à l'appareil utilisateur LTE un message de demande de capacité d'équipement utilisateur de contrôle de ressources radio, RRC UE, un message de demande d'identité NAS ou un message de commande de mode de sécurité NAS ; et
recevoir (426) de l'appareil utilisateur LTE un message de réponse au message de demande de capacité d'équipement utilisateur de contrôle de ressources radio, RRC UE, au message de demande d'identité NAS ou au message de commande de mode de sécurité NAS dans la deuxième connexion radio ;
pendant (428) la période de temps prédéterminée avant l'expiration du temporisateur NAS :
transmettre (430) un message de libération RRC avec une redirection vers la première cellule LTE ad hoc dans la deuxième connexion radio à l'appareil utilisateur LTE,
et dans lequel les un ou plusieurs processeurs (104A) de la première station de base radio ad hoc (100A) sont configurés pour provoquer la réalisation d'au moins l'étape suivante :
poursuivre la réalisation à partir de la mise en place (406) de la première connexion radio dans la première cellule LTE ad hoc à l'appareil utilisateur LTE en utilisant la première procédure RACH.

8. Système selon la revendication 7, dans lequel les un ou plusieurs processeurs (104B) de la deuxième station de base radio ad hoc (100B) sont configurés pour provoquer la réalisation de ce qui suit :
après avoir reçu (426) de l'appareil utilisateur LTE le message de réponse dans la deuxième connexion radio, calculer (450) une estimation de distance par rapport à l'appareil utilisateur LTE sur la base d'une valeur d'avance de temporisation de liaison montante actuelle de la deuxième connexion radio.

9. Système selon la revendication 7, dans lequel les un ou plusieurs processeurs (104B) de la deuxième station de base radio ad hoc (100B) sont configurés pour provoquer la réalisation de ce qui suit :
après avoir reçu (426) de l'appareil utilisateur LTE le message de réponse dans la deuxième connexion radio, vérifier (442) si un délai prédéterminé à partir d'une procédure RACH précédente dans la deuxième cellule LTE ad hoc s'est écoulé pendant la période de temps prédéterminée, et si le délai prédéterminé s'est écoulé (442-YES), transmettre (444) un message d'instruction de canal physique de contrôle de liaison descendante de couche 1, L1 PDCCH, dans la deuxième connexion radio à l'appareil utilisateur LTE, et réaliser (446) une nouvelle procédure RACH avec l'appareil utilisateur LTE pour mettre en place la deuxième connexion radio dans la deuxième cellule LTE ad hoc à l'appareil utilisateur LTE.

10. Système selon la revendication 9, dans lequel les un ou plusieurs processeurs (104B) de la deuxième station de base radio ad hoc (100B) sont configurés pour provoquer la réalisation de ce qui suit :
calculer (448) une estimation de distance par rapport à l'appareil utilisateur LTE sur la base de la mise en place de la deuxième connexion radio par la nouvelle procédure RACH.

11. Système selon la revendication 7, dans lequel les un ou plusieurs processeurs (104B) de la deuxième station de base radio ad hoc (100B) sont configurés pour provoquer la réalisation de ce qui suit :
pendant (428) la période de temps prédéterminée avant l'expiration du temporisateur NAS :
avant de transmettre (410) le message de libération RRC avec la redirection vers la première cellule LTE ad hoc dans la deuxième connexion radio à l'appareil utilisateur LTE, transmettre (408) un message de rejet NAS avec une panne ou une congestion de réseau comme cause dans la deuxième connexion radio à l'appareil utilisateur LTE.

12. Système selon la revendication 7, dans lequel les un ou plusieurs processeurs (104B) de la deuxième station de base radio ad hoc (100B) sont configurés pour provoquer la réalisation de ce qui suit :
avant de forcer (424) l'appareil utilisateur LTE à envoyer des messages de liaison montante dans la deuxième connexion radio en envoyant à l'appareil utilisateur LTE un message de demande de capacité RRC UE, un message de demande d'identité NAS ou un message de commande de mode de sécurité NAS, avec un message de contrôle de contrôle d'accès au support, MAC, dans la deuxième connexion radio, commander (422) à l'appareil utilisateur LTE d'utiliser une mémoire tampon complète dans tous les messages de liaison montante de la deuxième connexion radio.

13. Procédé réalisé par une station de base ad hoc (100) pour mettre en œuvre deux cellules ad hoc successives, comprenant les étapes suivantes :
mettre en place (302), en utilisant un ou plusieurs émetteurs-récepteurs radio configurés pour recevoir et émettre dans un réseau radio cellulaire d'évolution à long terme, LTE, une cellule LTE ad hoc sur un numéro de canal avec un ID de cellule physique, PCID, et un code de zone de suivi, TAC,
mettre en place (306) une connexion radio dans la cellule LTE ad hoc à un appareil utilisateur LTE en utilisant une procédure de canal d'accès aléatoire, RACH ;
établir (308) un temporisateur de strate de non-accès, NAS, simultanément à la mise en place de la connexion radio ; **caractérisé par** ce qui suit
répéter (310) les trois étapes suivantes jusqu'à ce qu'il reste une période de temps prédéterminée avant une expiration du temporisateur NAS :
avec un message de contrôle de contrôle d'accès au support, MAC, dans la connexion radio, commander (312) à l'appareil utilisateur LTE d'utiliser une mémoire tampon complète dans tous les messages de liaison montante de la connexion radio ;
forcer (314) l'appareil utilisateur LTE à envoyer des messages de liaison montante dans la connexion radio en envoyant à l'appareil utilisateur LTE un message de demande de capacité d'équipement utilisateur de contrôle de ressources radio, RRC UE, un message de demande d'identité NAS ou un message de commande de mode de sécurité NAS ; et
recevoir (316) de l'appareil utilisateur LTE un message de réponse au message de demande de capacité d'équipement utilisateur de contrôle de ressources radio (RRC UE), au message de demande d'identité NAS ou au message de commande de mode de sécurité NAS dans la connexion radio ;
pendant (318) la période de temps prédéterminée avant l'expiration du temporisateur NAS :
redémarrer (320) la cellule LTE ad hoc sur le numéro de canal avec un PCID différent et un TAC différent de ceux de la connexion radio précédente ; et
poursuivre la réalisation à partir de la mise en place (306) de la connexion radio avec le PCID différent et le TAC différent dans la cellule LTE ad hoc à l'appareil utilisateur LTE en utilisant la procédure RACH.

14. Procédé pour mettre en œuvre deux cellules ad hoc simultanées réalisé par un système, le système comprenant une première station de base ad hoc (100A) et une deuxième station de base ad hoc (100B), comprenant les étapes suivantes :
la première station de base ad hoc (100A) met en place (402), en utilisant un ou plusieurs émetteurs-récepteurs radio configurés pour recevoir et émettre dans un réseau radio cellulaire d'évolution à long terme, LTE, une première cellule LTE ad hoc sur un premier numéro de canal avec un premier code de zone de suivi, TAC ;
la deuxième station de base ad hoc (100B) met en place (412), en utilisant un ou plusieurs émetteurs-récepteurs radio configurés pour recevoir et émettre dans le réseau radio cellulaire LTE, une deuxième cellule LTE ad hoc sur un deuxième numéro de canal avec un deuxième TAC ;
la première station de base ad hoc (100A) met en place (406) une première connexion radio dans la première cellule LTE ad hoc à un appareil utilisateur LTE en utilisant une première procédure de canal d'accès aléatoire, RACH ; et
la première station de base ad hoc (100A) transmet (410) un message de libération de contrôle de ressource radio, RRC, avec une redirection vers une deuxième cellule LTE ad hoc dans la première connexion radio à l'appareil utilisateur LTE,
la deuxième station de base ad hoc (100B) met en place (416) une deuxième connexion radio dans la deuxième cellule LTE ad hoc à l'appareil utilisateur LTE en utilisant une deuxième procédure RACH, parce que la première cellule LTE ad hoc a transmis à l'appareil utilisateur LTE le message de libération RRC avec la redirection vers la deuxième cellule LTE ad hoc ;
la deuxième station de base ad hoc (100B) établit (418) un temporisateur de strate de non-accès, NAS, simultanément à la mise en place de la deuxième connexion radio ; **caractérisé par** ce qui suit
la deuxième station de base ad hoc (100B) répète (420) les deux étapes suivantes jusqu'à ce qu'il reste une période de temps prédéterminée avant une expiration du temporisateur NAS :
la deuxième station de base ad hoc (100B) force (424) l'appareil utilisateur LTE à envoyer des messages de liaison montante dans la deuxième connexion radio en envoyant à l'appareil utilisateur LTE un message de demande de capacité d'équipement utilisateur de contrôle de ressources radio, RRC UE, un message de demande d'identité NAS ou un message de commande de mode de sécurité NAS ; et
la deuxième station de base ad hoc (100B) reçoit (426) de l'appareil utilisateur LTE un message de réponse au message de demande de capacité d'équipement utilisateur de contrôle de ressources radio (RRC UE), au message de demande d'identité NAS ou au message de commande de mode de sécurité NAS dans la deuxième connexion radio ;
pendant (428) la période de temps prédéterminée avant l'expiration du temporisateur NAS :
la deuxième station de base ad hoc (100B) transmet (430) un message de libération RRC avec une redirection vers la première cellule LTE ad hoc dans la deuxième connexion radio à l'appareil utilisateur LTE ; et
la première station de base ad hoc (100A) poursuit la réalisation à partir de la mise en place (406) de la première connexion radio dans la première cellule LTE ad hoc à l'appareil utilisateur LTE en utilisant la première procédure RACH.

15. Support lisible par ordinateur (112) comprenant un code de programme informatique (110) qui, lorsqu'il est exécuté par un ou plusieurs microprocesseurs (106) d'une station de base ad hoc (100), amène ladite station de base ad hoc à réaliser un procédé pour mettre en œuvre deux cellules ad hoc successives, comprenant les étapes suivantes :
mettre en place (302), en utilisant un ou plusieurs émetteurs-récepteurs radio configurés pour recevoir et émettre dans un réseau radio cellulaire d'évolution à long terme, LTE, une cellule LTE ad hoc sur un numéro de canal avec un ID de cellule physique, PCID, et un code de zone de suivi, TAC,
mettre en place (306) une connexion radio dans la cellule LTE ad hoc à un appareil utilisateur LTE en utilisant une procédure de canal d'accès aléatoire, RACH ;
établir (308) un temporisateur de strate de non-accès, NAS, simultanément à la mise en place de la connexion radio ; **caractérisé par** ce qui suit
répéter (310) les trois étapes suivantes jusqu'à ce qu'il reste une période de temps prédéterminée avant une expiration du temporisateur NAS :
avec un message de contrôle de contrôle d'accès au support, MAC, dans la connexion radio, commander (312) à l'appareil utilisateur LTE d'utiliser une mémoire tampon complète dans tous les messages de liaison montante de la connexion radio ;
forcer (314) l'appareil utilisateur LTE à envoyer des messages de liaison montante dans la connexion radio en envoyant à l'appareil utilisateur LTE un message de demande de capacité d'équipement utilisateur de contrôle de ressources radio, RRC UE, un message de demande d'identité NAS ou un message de commande de mode de sécurité NAS ; et
recevoir (316) de l'appareil utilisateur LTE un message de réponse au message de demande de capacité d'équipement utilisateur de contrôle de ressources radio (RRC UE), au message de demande d'identité NAS ou au message de commande de mode de sécurité NAS dans la connexion radio ;
pendant (318) la période de temps prédéterminée avant l'expiration du temporisateur NAS :
redémarrer (320) la cellule LTE ad hoc sur le numéro de canal avec un PCID différent et un TAC différent de ceux de la connexion radio précédente ; et
poursuivre la réalisation à partir de la mise en place (306) de la connexion radio avec le PCID différent et le TAC différent dans la cellule LTE ad hoc à l'appareil utilisateur LTE en utilisant la procédure RACH.
